# DEMANDE DE BREVET EUROPEEN

(11) **EP 3 824 775 A1**
(43) Date de publication de la demande: **26.05.2021**
(21) Numéro de dépôt: 20208252.5
(22) Date de dépôt: 18.11.2020
(51) Int. Cl.: A47J 36/32, A47J 43/04, A47J 43/07, A47J 44/02

(54) **PROCÉDÉ DE TRAITEMENT DE DONNÉES RELATIVES À AU MOINS UNE ÉTAPE DE PRÉPARATION D'UNE RECETTE DE CUISINE**

(30) Priorité: 19.11.2019 FR 1912889
(71) Demandeur: SEB S.A., 69130 Ecully (FR)
(72) Inventeur: SAUNIER, Christophe, 38270 PRIMARETTE (FR)
(74) Mandataire: SEB Développement

(57) **Abrégé**

Procédé de traitement de données relatives à une recette de cuisine préparée avec un appareil de préparation culinaire (1), le procédé comprenant les étapes suivantes : acquisition d'au moins une information sur au moins une étape de préparation d'une recette de cuisine à partir d'au moins un capteur d'acquisition (13) de l'appareil de préparation culinaire (1) et/ou à partir d'une configuration de paramètres de fonctionnement de l'appareil de préparation culinaire (1) ; stockage dans une mémoire (21) de l'au moins une information sur l'au moins une étape de préparation d'une recette de cuisine.

## Description

### Domaine de l'invention

La présente invention concerne un procédé de traitement de données relatives à une recette de cuisine préparée avec un appareil de préparation culinaire. La présente invention concerne également un appareil de préparation culinaire.

### Art antérieur

Il est connu d'utiliser un appareil de préparation culinaire connecté à un réseau de communication de type wifi. Cette disposition est utile puisqu'il est possible de télécharger à partir du réseau de communication des paramètres de réglage dans le but d'exécuter une recette de cuisine connue.

Cette possibilité peut toutefois être limitante pour un utilisateur car s'il souhaite disposer d'informations complémentaires sur la recette de cuisine, il doit faire des recherches sur un support autre que l'appareil de préparation culinaire.

L'utilisateur peut par exemple utiliser un terminal mobile comme une tablette ou un smartphone. Dans ce contexte, il peut s'avérer difficile de coordonner l'utilisation de la tablette et de l'appareil culinaire lors de la réalisation d'une recette de cuisine. Il peut également s'avérer difficile de consigner les différentes étapes d'une recette de cuisine mise au point par l'utilisateur dans le but de la partager avec ses amis.

La présente invention vise à résoudre tout ou partie des inconvénients mentionnés ci-dessus.

### Exposé de l'invention

A cet effet, la présente invention concerne un procédé de traitement de données relatives à une recette de cuisine préparée avec un appareil de préparation culinaire, le procédé comprenant les étapes suivantes :
- acquisition d'au moins une information sur au moins une étape de préparation d'une recette de cuisine à partir d'au moins un capteur d'acquisition de l'appareil de préparation culinaire et/ou à partir d'une configuration de paramètres de fonctionnement de l'appareil de préparation culinaire,
- stockage dans une mémoire de l'au moins une information sur l'au moins une étape de préparation d'une recette de cuisine.

Cette disposition permet de faire remonter et de stocker dans la mémoire une ou plusieurs informations relatives à une ou plusieurs étapes de la recette de cuisine.

Ainsi, il est possible de suivre et d'enregistrer au fur et à mesure l'exécution de différentes phases de la préparation de la recette de cuisine. Cette disposition est particulièrement intéressante lorsque la recette de cuisine est nouvelle et qu'il n'existe pas encore d'instructions et/ou de configurations de paramètres de fonctionnement pour la reproduire.

Selon un aspect de l'invention, les paramètres de fonctionnement comprennent des réglages exclusivement manuels de l'ensemble des paramètres de réglage ou bien une combinaison des réglages automatiques de certains paramètres de réglage avec des réglages manuels d'autres paramètres de réglage.

Il n'est pas exclu non plus que l'ensemble des paramètres de réglage soient déjà automatiquement réglés. Cela permettra tout de même aux utilisateurs distants de suivre le résultat de la recette de cuisine.

Selon un aspect de l'invention, l'au moins une information comprend au moins une image et/ou au moins un son, l'au moins un capteur d'acquisition comprenant au moins un capteur audio, photo et/ou vidéo.

Cette disposition permet de stocker dans la mémoire des informations en lien avec la recette de cuisine en plus des informations directement liées aux réglages de fonctionnement.

Selon un aspect de l'invention, les paramètres de fonctionnement de l'appareil de préparation culinaire comprennent au moins un temps de cuisson et au moins une température de cuisson, et le cas échéant une vitesse de rotation d'un outil de l'appareil de préparation culinaire.

Cette disposition permet de définir une configuration des paramètres de réglage qui pourra être réutilisée ultérieurement car cette configuration est stockée en mémoire.

Selon un aspect de l'invention, l'au moins un capteur d'acquisition de l'appareil de préparation culinaire est amovible et/ou orientable.

L'utilisateur a ainsi plus de souplesse pour définir les informations sur la recette de cuisine qu'il souhaite enregistrer en mémoire, le capteur étant apte à être déplacé.

Selon un aspect de l'invention, l'au moins un capteur d'acquisition comprend une caméra et/ou un micro.

Selon un aspect de l'invention, la caméra coopère avec un boitier de l'appareil de préparation culinaire selon une liaison de type rotule.

L'utilisateur peut ainsi aisément adapter l'orientation de la caméra et filmer ce qu'il désire, comme par exemple son visage ou un plan de travail à proximité de l'appareil de préparation culinaire.

Selon un aspect de l'invention, l'au moins un capteur d'acquisition est agencé pour acquérir au moins une information sur l'au moins une étape de préparation d'une recette de cuisine réalisée à l'intérieur d'un bol de l'appareil de préparation culinaire et/ou à l'extérieur du bol.

Cette disposition permet à l'utilisateur d'enregistrer des informations sur une étape de préparation de la recette de cuisine pouvant être réalisée dans et/ou en dehors de l'appareil de préparation culinaire.

Selon un aspect de l'invention, le procédé de traitement comprend une étape de traitement de l'information sur l'au moins une étape de préparation d'une recette de cuisine stockée dans la mémoire pour contrôler l'état d'avancement de la réalisation de l'au moins une étape de préparation d'une recette de cuisine.

Cette disposition permet de déterminer le début et la fin de chaque étape de la recette de cuisine. Il est également possible de réaliser un séquencement pour classer chronologiquement les informations acquises à enregistrer.

Selon un aspect de l'invention, l'état d'avancement de la réalisation de l'au moins une étape de préparation d'une recette de cuisine comprend l'état d'ébullition de la préparation culinaire contenue dans l'appareil de préparation culinaire, l'état de la texture de la préparation culinaire ou l'état de la couleur de la préparation culinaire.

Cette disposition permet de caractériser l'avancement par un changement d'état d'au moins un ingrédient de la recette de cuisine.

Selon un aspect de l'invention, le procédé de traitement comprend une étape de reconfiguration de paramètres de fonctionnement de l'appareil de préparation culinaire en fonction du résultat du contrôle de l'état d'avancement de la réalisation de l'au moins une étape de préparation d'une recette de cuisine.

Cette disposition permet une adaptation des paramètres de fonctionnement en fonction de changements d'états de l'au moins un ingrédient de la recette de cuisine.

Selon un aspect de l'invention, le procédé de traitement comprend une étape de diffusion de l'au moins une information depuis un premier appareil de préparation culinaire vers un deuxième appareil de préparation culinaire.

Cette disposition permet de réaliser la recette de cuisine sur le deuxième appareil de préparation culinaire à partir des informations reçues.

Selon un aspect de l'invention la mémoire est disposée sur le premier appareil de préparation culinaire et l'étape de diffusion comprend une sous-étape de transfert de l'au moins une information stockée dans la mémoire vers un serveur distant, ou bien la mémoire dans laquelle l'au moins une information est stockée est un serveur distant connecté au premier appareil de préparation culinaire.

L'utilisation d'un serveur distant permet une diffusion plus aisée vers le deuxième appareil de préparation culinaire.

Selon un aspect de l'invention, l'au moins une information est utilisée par le deuxième appareil de préparation culinaire pour configurer des paramètres de fonctionnement du deuxième appareil de préparation culinaire.

L'implémentation de la recette de cuisine sur le deuxième appareil de préparation culinaire est facilitée puisque les informations reçues permettent de régler les paramètres de fonctionnement.

Selon un aspect de l'invention, l'au moins une information acquise sur le premier appareil de préparation culinaire est diffusée en temps réel et/ou en continu sur le deuxième appareil de préparation culinaire.

Il est ainsi possible de préparer en temps réel la recette de cuisine sur le deuxième appareil de préparation culinaire.

Selon un aspect de l'invention, une communication bidirectionnelle est établie entre l'appareil de préparation culinaire et le deuxième appareil de préparation culinaire.

Il est ainsi possible d'échanger des informations relatives à différentes recettes de cuisine entre l'appareil de préparation culinaire, dit premier appareil de préparation culinaire, et le deuxième appareil de préparation culinaire.

Selon un aspect de l'invention, l'au moins une information est diffusée vers un réseau de communication destiné au partage d'informations.

Le principal avantage est de créer du lien entre les utilisateurs. Il s'agit de renforcer la notion de communauté pour des utilisateurs ayant des appareils culinaires compatibles et connectés au réseau de communication. Il est par exemple possible de donner des cours de cuisine en direct et à distance.

La présente invention concerne également un appareil de préparation culinaire comprenant un bol, au moins un outil de préparation culinaire configuré pour travailler au moins un ingrédient disposé dans le bol et un système de commande configuré pour commander l'au moins un outil de préparation culinaire et configuré pour échanger des informations avec un réseau de communication, l'appareil de préparation culinaire comprenant en outre au moins un capteur d'acquisition et le système de commande étant configuré pour réaliser un procédé de traitement tel que décrit ci-avant.

Selon un aspect de l'invention, l'appareil de préparation culinaire comprend en outre un écran configuré pour afficher les informations sur l'au moins une recette de cuisine.

Cette disposition permet à l'utilisateur d'échanger aisément des informations de préparation sur l'écran de son appareil de préparation culinaire.

Selon un aspect de l'invention, l'information sur l'au moins une étape de préparation d'une recette culinaire a un format compatible avec la transmission par wifi et/ou réseau de données téléphonique.

Selon un aspect de l'invention, le format compatible est de type h264/h265 ou VPU/VP9.

Selon un aspect de l'invention, le système de commande comprend un microprocesseur. De préférence, le microprocesseur est double cœur.

Les différents aspects définis ci-dessus non incompatibles peuvent être combinés.

### Brève description des figures

L'invention sera mieux comprise à l'aide de la description détaillée qui est exposée ci-dessous en regard des dessins annexés.
La figure 1 est une vue d'une cuisine comprenant un appareil de préparation culinaire et un plan de travail.
La figure 2 est une vue schématique d'une pluralité d'appareils de préparation culinaire et d'un serveur pour échanger des informations.
La figure 3 est une vue en perspective d'un écran et d'une caméra de l'appareil de préparation culinaire.
La figure 4 est un schéma représentant les étapes d'un procédé de traitement de données relatives à une recette de cuisine.

### Description en référence aux figures

Dans la description détaillée qui va suivre des figures définies ci-dessus, les mêmes éléments ou les éléments remplissant des fonctions identiques pourront conserver les mêmes références de manière à simplifier la compréhension de l'invention.

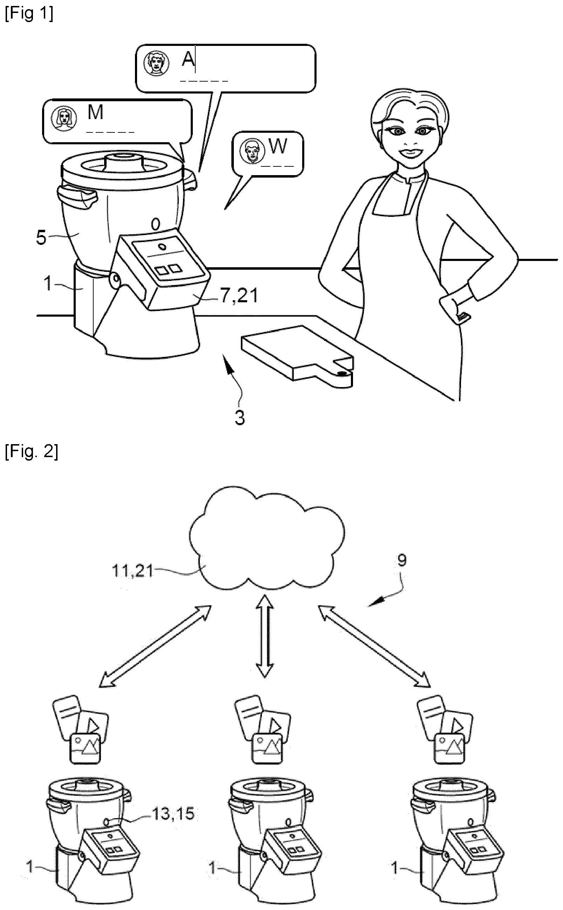

Comme illustré à la figure 1, un appareil de préparation culinaire 1 est disposé sur un plan de travail 3 d'une cuisine.

L'appareil de préparation culinaire 1 comprend un bol 5, au moins un outil de préparation culinaire configuré pour travailler au moins un ingrédient disposé dans le bol 5 et un système de commande 7.

Le système de commande 7 est configuré pour commander l'au moins un outil de préparation culinaire et pour échanger des informations avec un réseau de communication 9 comme illustré à la figure 2.

Il est également possible de connecter une pluralité d'appareils de préparation culinaire 1 au réseau de communication 9, le réseau de communication 9 comprenant un serveur 11 pour l'échange d'informations entre la pluralité d'appareils de préparation culinaire 1.

L'appareil de préparation culinaire 1 comprend en outre au moins un capteur d'acquisition 13 et en particulier une pluralité de capteurs d'acquisition 13 tels qu'une caméra 15 et un micro.

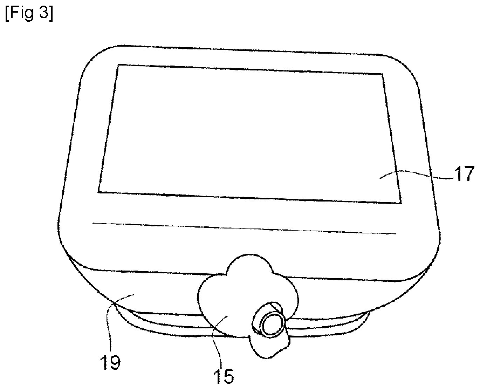

Comme illustré à la figure 3, l'appareil de préparation culinaire 1 comprend en outre un écran 17 configuré pour afficher des informations. L'écran 17 est également tactile de manière à autoriser la saisie de commandes ou de modifications de paramètres de l'appareil de préparation culinaire 1. L'écran 17 est donc également à considérer comme un capteur d'acquisition 13.

Les informations échangées via le réseau de communication 9 ont un format compatible avec la transmission par wifi et/ou réseau de données téléphonique. En particulier, le format compatible est de type h264/h265 ou VPU/VP9.

Le système de commande 7 comprend un microprocesseur. De préférence, le microprocesseur est double cœur.

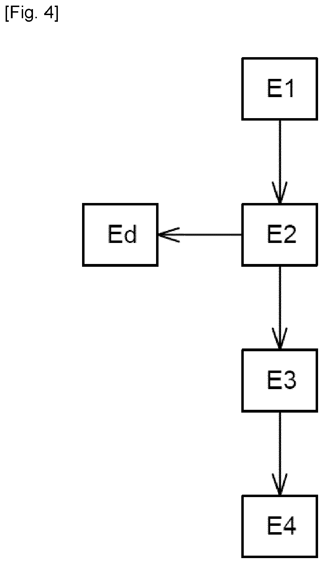

Le système de commande 7 est configuré pour mettre en œuvre un procédé de traitement illustré à la figure 4. Le procédé de traitement de données est relatif à une recette de cuisine préparée avec l'appareil de préparation culinaire 1 et comprend les étapes détaillées ci-après.

Une première étape E1 consiste en une acquisition d'au moins une information sur au moins une étape de préparation d'une recette de cuisine à partir d'au moins un capteur d'acquisition 13 de l'appareil de préparation culinaire 1 et/ou à partir d'une configuration de paramètres de fonctionnement de l'appareil de préparation culinaire 1.

L'au moins une information comprend au moins une image et/ou au moins un son, l'au moins un capteur d'acquisition 13 comprenant au moins un capteur audio, photo et/ou vidéo comme détaillé plus haut.

L'au moins un capteur d'acquisition 13 est agencé pour acquérir au moins une information sur l'au moins une étape de préparation d'une recette de cuisine réalisée à l'intérieur du bol 5 et/ou à l'extérieur du bol 5.

L'au moins un capteur d'acquisition 13 de l'appareil de préparation culinaire est amovible et/ou orientable.

Dans le mode de réalisation des figures 1 à 3, un premier capteur d'acquisition 13 est la caméra 15. La caméra 15 coopère avec un boitier 19 de l'appareil de préparation culinaire 1 selon une liaison de type rotule.

L'utilisateur peut ainsi aisément adapter l'orientation de la caméra 15 et filmer ce qu'il désire, comme par exemple son visage ou un plan de travail 3 à proximité de l'appareil de préparation culinaire 1.

Un deuxième capteur d'acquisition 13 est le micro qui, couplé avec un haut-parleur de l'appareil de préparation culinaire 1, permet de dialoguer avec des utilisateurs d'autres appareils de préparation culinaire du réseau de communication.

Cette situation est représentée à la figure 1 dans laquelle les utilisateurs A, M, W dialoguent via le réseau de communication 9 en utilisant chacun leur appareil de préparation culinaire 1.

Un troisième capteur d'acquisition 13 est l'écran 17 tactile qui permet de saisir un texte comme un commentaire ou permettant de modifier un paramètre de l'appareil de préparation culinaire 1.

Les paramètres de fonctionnement de l'appareil de préparation culinaire 1 comprennent au moins un temps de cuisson et au moins une température de cuisson, et/ou une vitesse de rotation d'un outil de l'appareil de préparation culinaire 1.

Les paramètres de fonctionnement comprennent des réglages exclusivement manuels de l'ensemble des paramètres de réglage ou bien une combinaison des réglages automatiques de certains paramètres de réglage avec des réglages manuels d'autres paramètres de réglage.

Il n'est pas exclu non plus que l'ensemble des paramètres de réglage soient déjà automatiquement réglés.

Une deuxième étape E2 consiste en un stockage dans une mémoire 21 de l'au moins une information sur l'au moins une étape de préparation d'une recette de cuisine.

Ainsi une ou plusieurs informations relatives à une ou plusieurs étapes de la recette de cuisine sont remontées et stockées dans la mémoire 21.

Une troisième étape E3 consiste en un traitement de l'information sur l'au moins une étape de préparation d'une recette de cuisine stockée dans la mémoire 21 pour contrôler l'état d'avancement de la réalisation de l'au moins une étape de préparation d'une recette de cuisine.

On détermine ainsi le début et la fin de chaque étape de la recette de cuisine. Il est également possible de réaliser un séquencement pour classer chronologiquement les informations acquises à enregistrer.

L'état d'avancement de la réalisation de l'au moins une étape de préparation d'une recette de cuisine comprend l'état d'ébullition de la préparation culinaire contenue dans le bol 5 de l'appareil de préparation culinaire 1, l'état de la texture de la préparation culinaire ou l'état de la couleur de la préparation culinaire.

Une quatrième étape E4 consiste en une reconfiguration de paramètres de fonctionnement de l'appareil de préparation culinaire 1 en fonction du résultat du contrôle de l'état d'avancement de la réalisation de l'au moins une étape de préparation d'une recette de cuisine.

Cette étape est en d'autres termes une adaptation des paramètres de fonctionnement en fonction de changements d'états de l'au moins un ingrédient de la recette de cuisine.

Une étape Ed suivant l'étape de stockage E2 consiste en une diffusion de l'au moins une information vers un deuxième appareil de préparation culinaire 1 pour réaliser la recette de cuisine sur le deuxième appareil de préparation culinaire 1 à partir des informations diffusées de l'appareil de préparation culinaire 1 dit premier appareil de préparation culinaire 1.

Lorsque la mémoire 21 est disposée sur l'appareil de préparation culinaire 1, l'étape de diffusion comprend une sous-étape de transfert de l'au moins une information stockée dans la mémoire 21 vers le serveur 11 distant.

Sinon la mémoire 21 dans laquelle l'au moins une information est stockée correspond au serveur 11 distant. Dans ce cas, le deuxième appareil de préparation culinaire 1 télécharge l'au moins une information depuis le serveur 11.

L'au moins une information diffusée est utilisée par le deuxième appareil de préparation culinaire 1 pour configurer des paramètres de fonctionnement du deuxième appareil de préparation culinaire 1.

L'au moins une information acquise sur le premier appareil de préparation culinaire 1 est diffusée en temps réel et/ou en continu sur le deuxième appareil de préparation culinaire 1.

Une communication bidirectionnelle peut être établie entre le premier appareil de préparation culinaire 1 et le deuxième appareil de préparation culinaire 1 pour échanger des informations relatives à différentes recettes de cuisine.

Le procédé de traitement est avantageux dans le sens où l'utilisateur a plus de souplesse pour définir les informations sur la recette de cuisine qu'il souhaite enregistrer en mémoire 21 car il peut utiliser l'au moins un capteur d'acquisition 13.

Cette disposition permet à l'utilisateur d'enregistrer des informations sur une étape de préparation de la recette de cuisine pouvant être réalisée dans et/ou en dehors de l'appareil de préparation culinaire 1.

Le principal avantage de l'étape Ed de diffusion est de créer du lien entre les utilisateurs. Il s'agit de renforcer la notion de communauté pour des utilisateurs ayant des appareils de préparation culinaire 1 compatibles et connectés au réseau de communication. Il est par exemple possible de donner des cours de cuisine en direct et à distance.

Il est possible de suivre et d'enregistrer au fur et à mesure l'exécution de différentes phases de la préparation de la recette de cuisine. Il est également possible de préparer en temps réel la recette de cuisine sur le deuxième appareil de préparation culinaire 1.

Comme il va de soi, l'invention ne se limite pas à la seule forme d'exécution décrite ci-dessus à titre d'exemple, elle en embrasse au contraire toutes les variantes de réalisation.

## Revendications

1. Procédé de traitement de données relatives à une recette de cuisine préparée avec un appareil de préparation culinaire (1), le procédé comprenant les étapes suivantes :
- (E1) acquisition d'au moins une information sur au moins une étape de préparation d'une recette de cuisine à partir d'au moins un capteur d'acquisition (13) de l'appareil de préparation culinaire (1) et/ou à partir d'une configuration de paramètres de fonctionnement de l'appareil de préparation culinaire (1),
- (E2) stockage dans une mémoire (21) de l'au moins une information sur l'au moins une étape de préparation d'une recette de cuisine.

2. Procédé de traitement selon la revendication 1, dans lequel l'au moins une information comprend au moins une image et/ou au moins un son, l'au moins un capteur d'acquisition (13) comprenant au moins un capteur audio, photo et/ou vidéo.

3. Procédé de traitement selon l'une des revendications 1 ou 2, dans lequel les paramètres de fonctionnement de l'appareil de préparation culinaire (1) comprennent au moins un temps de cuisson et au moins une température de cuisson, et le cas échéant une vitesse de rotation d'un outil de l'appareil de préparation culinaire (1).

4. Procédé de traitement selon l'une des revendications 1 à 3, dans lequel l'au moins un capteur d'acquisition (13) de l'appareil de préparation culinaire (1) est amovible et/ou orientable.

5. Procédé de traitement selon l'une des revendication 1 à 4, dans lequel l'au moins un capteur d'acquisition (13) est agencé pour acquérir au moins une information sur l'au moins une étape de préparation d'une recette de cuisine réalisée à l'intérieur d'un bol (5) de l'appareil de préparation culinaire (1) et/ou à l'extérieur du bol (5).

6. Procédé de traitement selon l'une des revendications 1 à 5, comprenant une étape (E3) de traitement de l'information sur l'au moins une étape de préparation d'une recette de cuisine stockée dans la mémoire (21) pour contrôler l'état d'avancement de la réalisation de l'au moins une étape de préparation d'une recette de cuisine.

7. Procédé de traitement selon la revendication 6, dans lequel l'état d'avancement de la réalisation de l'au moins une étape de préparation d'une recette de cuisine comprend l'état d'ébullition de la préparation culinaire contenue dans l'appareil de préparation culinaire (1), l'état de la texture de la préparation culinaire ou l'état de la couleur de la préparation culinaire.

8. Procédé de traitement selon l'une des revendications 6 ou 7, comprenant une étape (E4) de reconfiguration de paramètres de fonctionnement de l'appareil de préparation culinaire (1) en fonction du résultat du contrôle de l'état d'avancement de la réalisation de l'au moins une étape de préparation d'une recette de cuisine.

9. Procédé de traitement selon l'une des revendications 1 à 8, comprenant une étape (Ed) de diffusion de l'au moins une information depuis un premier appareil de préparation culinaire (1) vers un deuxième appareil de préparation culinaire (1).

10. Procédé de traitement selon la revendication 9, dans lequel :
- la mémoire (21) est disposée sur le premier appareil de préparation culinaire (1) et l'étape (Ed) de diffusion comprend une sous-étape de transfert de l'au moins une information stockée dans la mémoire (21) vers un serveur (11) distant, ou bien
- la mémoire (21) dans laquelle l'au moins une information est stockée est un serveur (11) distant connecté au premier appareil de préparation culinaire (1).

11. Procédé de traitement selon la revendication 9 ou 10, dans lequel l'au moins une information est utilisée par le deuxième appareil de préparation culinaire (1) pour configurer des paramètres de fonctionnement du deuxième appareil de préparation culinaire (1).

12. Procédé de traitement selon l'une des revendications 9 à 11, dans lequel l'au moins une information acquise sur le premier appareil de préparation culinaire (1) est diffusée en temps réel et/ou en continu sur le deuxième appareil de préparation culinaire (1).

13. Procédé de traitement selon l'une des revendications 9 à 12, dans lequel une communication bidirectionnelle est établie entre l'appareil de préparation culinaire (1) et le deuxième appareil de préparation culinaire (1).

14. Procédé de traitement selon l'une des revendications 1 à 13, dans lequel l'au moins une information est diffusée vers un réseau de communication (9) destiné au partage d'informations.

15. Appareil de préparation culinaire (1) comprenant un bol (5), au moins un outil de préparation culinaire configuré pour travailler au moins un ingrédient disposé dans le bol (5) et un système de commande (7) configuré pour commander l'au moins un outil de préparation culinaire et configuré pour échanger des informations avec un réseau de communication (9), l'appareil de préparation culinaire (1) comprenant en outre au moins un capteur d'acquisition (13) et le système de commande (7) étant configuré pour réaliser un procédé de traitement selon l'une des revendications 1 à 14.
